# EUROPEAN PATENT APPLICATION

(11) **EP 4 494 873 A1**
(43) Date of publication of application: **22.01.2025**
(21) Application number: 22931813.4
(22) Date of filing: 25.11.2022
(51) Int. Cl.: B32B 37/12, B32B 37/00, B32B 37/10

(54) **SOLVENT-FREE THREE-IN-ONE LAMINATING DEVICE BASED ON DOUBLE-SIDED COATING OF INTERMEDIATE LAYER**

(30) Priority: 17.03.2022 CN 202210264647
(71) Applicant: Sinomech Corporation, Guangzhou, Guangdong 510803 (CN)
(72) Inventor: ZUO, Guangshen, Guangzhou, Guangdong 510803 (CN); HUANG, Shunli, Guangzhou, Guangdong 510803 (CN)
(74) Representative: Haseltine Lake Kempner LLP
(86) International application number: PCT/CN2022/134320
(87) International publication number: WO 2023/173802

(57) **Abstract**

A solvent-free triplex laminating machine based on double-sided coating of the intermediate web. The reel of intermediate web is unwound from the first unwinding unit, while the reel of surface web and the reel of inner web are unwound from the second and third unwinding units, respectively. The intermediate web enters the first coating unit for applying adhesives on the front-side and is then laminated with the surface or inner web in the first laminating unit to form a duplex composite film. The duplex composite film then enters the second coating unit, where its backside is coated. The surface or inner web is then laminated with the duplex composite film in the second aminating unit to form a triplex composite film with double-sided coating on the intermediate web. The invention is applicable to the triplex laminating process for double-sided coating of the intermediate web.

## Description

### Technical Field

The present invention relates to the field of solvent-free composite equipment, specially to a solvent-free triplex laminating machine based on double-sided coating of the intermediate web.

### Background Art

Solvent-free triplex laminating refers to a process where three webs are laminated in one go without using solvents. This process has advantages such as high production efficiency, high yield rate, and the ability to avoid certain disadvantages of duplex laminating processes. Its application is continuously expanding. Typically, the solvent-free triplex laminating process involves applying adhesive twice, each time on the surfaces of two webs to laminate the compounding. However, in various fields, there are applications where the outer and inner layers of the three webs cannot have adhesive applied or where the adhesive application is not effective. To achieve this three webs composite structure, it is necessary to develop a process that allows adhesive to be applied on both sides of the intermediate web during the laminating process.

### Summary

The technical problem to be solved by the present invention is to provide a solvent-free triplex laminating machine based on double-sided coating of the intermediate web, addressing the issue of current solvent-free triplex laminating machine being unable to apply adhesive on both sides of the intermediate webs.

To solve the above technical problem, the technical solution of the present invention is: A solvent-free triplex laminating machine based on double-sided coating of the intermediate web, where the reel of the intermediate web is unwound by the first unwinding unit and enters the first section of the web path. the reel of the surface web and the reel of the inner web are respectively unwound by the second unwinding unit and the third unwinding unit, entering the second section and the third section of the web path, respectively.the intermediate web, following the first section of the web path, enters the first coating unit for applying adhesives on the front-side, then enters the fourth section of the web path.the surface web or inner web guided by the second section of the web path, and the intermediate web introduced by the fourth section of the web path, undergo the first laminating in the first laminating unit to form a duplex composite film. this duplex composite film, guided by the fifth section of the web path, enters the second coating unit.the second coating unit applies adhesives to the reverse side of the intermediate web of the duplex composite film, which then enters the sixth section of the web path. the surface web or inner web guided by the third section of the web path, and the duplex composite film introduced by the sixth section of the web path, undergo the second laminating in the second laminating unit to form a trilaminar composite film with double-sided coating of the intermediate web. this trilaminar composite film follows the seventh section of the web path to the winding unit for completion.

As an improvement, a solvent-free triplex laminating machine based on double-sided coating of the intermediate web includes a frame, with the first station, second station, third station, and fourth station arranged in sequence from left to right beneath the frame.the third unwinding unit is arranged on the left side of the first station. the winding unit and the second unwinding unit are arranged on the lower left and right of the second station, respectively. the second laminating unit is arranged above the left side of the second station. the first coating unit is arranged at the lower left of the third station. the first laminating unit is arranged above the left side of the third station. the first unwinding unit is arranged at the lower right of the third station. the second coating unit is arranged on the right side of the fourth station. the first section of the web path is located between the first unwinding unit and the first coating unit of the third station. the second section of the web path is located between the second unwinding unit of the second station and the first laminating unit of the third station.

The third section of the web path is located between the third unwinding unit of the first station and the second laminating unit of the second station. the fourth section of the web path is located between the first coating unit and the first laminating unit of the third station. the fifth section of the web path is located between the first laminating unit of the third station and the second coating unit of the fourth station. the sixth section of the web path is located between the second coating unit of the fourth station and the second laminating unit of the second station. the seventh section of web path is located between the second laminating unit and the winding unit of the second station.

As an improvement, a solvent-free triplex laminating machine based on double-sided coating of the intermediate web includes a frame, with the first station, second station, third station, and fourth station arranged in sequence from left to right beneath the frame. the winding unit is arranged on the left side of the first station. the second unwinding unit is arranged on the right side of the first station. the first coating unit is arranged at the lower left of the second station. the first laminating unit is arranged above the left side of the second station. the first unwinding unit is arranged at the lower right of the second station. the second coating unit is arranged at the lower right of the third station. the second laminating unit is arranged above the right side of the third station. the third unwinding unit is arranged on the right side of the fourth station. the first section of the web path is located between the first unwinding unit and the first coating unit of the second station. the second section of the web path is located between the second unwinding unit of the first station and the first laminating unit of the second station. the third section of the web path is located between the third unwinding unit of the fourth station and the second laminating unit of the third station. the fourth section of the web path is located between the first coating unit and the first laminating unit of the second station.the fifth section of the web path is located between the first laminating unit of the second station and the second coating unit of the third station. the sixth section of the web path is located between the second coating unit and the second laminating unit of the third station .The seventh web path is located between the second laminating unit of the third station and the winding unit of the first station.

As an improvement, a solvent-free triplex laminating machine based on double-sided coating of the intermediate web includes a frame, with the first station, second station, and third station arranged in sequence from left to right beneath the frame. the third unwinding unit is arranged on the left side of the first station. the winding unit and the second unwinding unit are arranged on the lower left and right of the second station, respectively. the second laminating unit is arranged above the left side of the second station. the first coating unit is arranged at the lower left of the third station.the first laminating unit is arranged above the left side of the third station. the first unwinding unit is arranged at the lower right of the third station. the second coating unit is arranged above the right side of the third station. the first section of the web path is located between the first unwinding unit and the first coating unit of the third station. the second section of the web path is located between the second unwinding unit of the second station and the first laminating unit of the third station. the third section of the web path is located between the third unwinding unit of the first station and the second laminating unit of the second station. the fourth section of the web path is located between the first coating unit and the first laminating unit of the third station. the fifth section of the web path is located between the first laminating unit and the second coating unit of the third station. the sixth section of the web path is located between the second coating unit of the third station and the second laminating unit of the second station. the seventh web path is located between the second laminating unit and the winding unit of the second station.

As an improvement, a solvent-free triplex laminating machine based on double-sided coating of the intermediate web includes a frame, with the first station, second station, and third station arranged in sequence from left to right beneath the frame.the third unwinding unit is arranged on the left side of the first station.
the winding unit and the second unwinding unit are arranged on the lower left and right of the second station, respectively. the second laminating unit is arranged above the left side of the second station. the first coating unit is arranged at the middle left of the third station. the first laminating unit is arranged above the left side of the third station. the first unwinding unit is arranged at the lower left of the third station.the second coating unit is arranged on the right side of the third station.
the first section of the web path is located between the first unwinding unit and the first coating unit of the third station.the second section of the web path is located between the second unwinding unit of the second station and the first laminating unit of the third station.the third section of the web path is located between the third unwinding unit of the first station and the second laminating unit of the second station.

The fourth section of the web path is located between the first coating unit and the first laminating unit of the third station. the fifth section of the web path is located between the first laminating unit and the second coating unit of the third station. the sixth section of the web path is located between the second coating unit of the third station and the second laminating unit of the second station.the seventh web path is located between the second laminating unit and the winding unit of the second station.

As an improvement, both the first coating unit and the second coating unit are solvent-free coating units.

As an improvement, tension sensing components for the substrate belt are provided in the first section, second section, third section, fourth section, fifth section, sixth section, and seventh section of the material belt path.

The beneficial effects of the present invention compared to the prior art are:
1. The range of substrates suitable for the solvent-free triplex laminating process is increased, making it possible to use method of solvent-free laminating for some composite structures that cannot have the outer substrate coated with adhesive. For example, in the cigarette packaging industry, it solves the problem of using the method of solvent-free laminating for the structure (transfer film/ aluminium foil/transfer film); in the special field of betel nut packaging, it solves the problem of using the method of solvent-free laminating for the structure (drawn film/PET/PE);
2. The adaptability of the process for certain three-web composite structures, such as BOPP(PET)/paper/PE, is improved. Due to the sensitivity of the PE substrate to adhesive temperature, this solution can avoid restrictions on the adhesive;
3. For small to medium orders or small to medium production scales, using this solution can complement the high-position unwinding type triplex laminating machine (suitable for mass production).

### Description of the Drawings

Figure 1 is a process flow diagram of the invention.
Figure 2 is a schematic diagram of the four- station short winding path model.
Figure 3 is a schematic diagram of the four-station short laminating path model.
Figure 4 is a schematic diagram of the three-station external unwinding model.
Figure 5 is a schematic diagram of the three-station internal unwinding model.

### Detailed Description

The present invention is further described in conjunction with the accompanying figures.

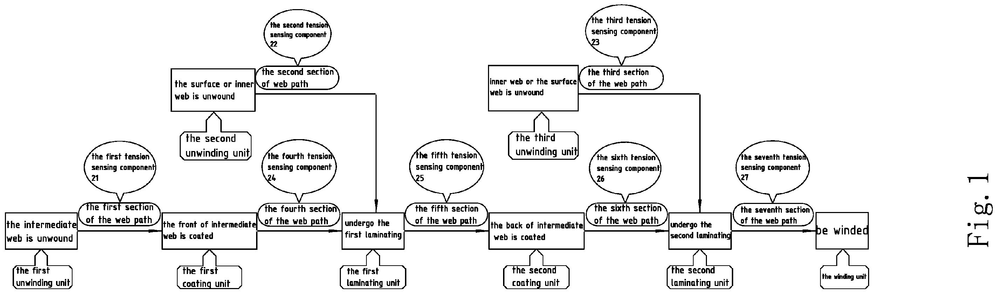

As shown in Figure 1, a solvent-free triplex laminating machine based on double-sided coating of the intermediate web is depicted. the reel of the intermediate web is unwound by the first unwinding unit and enters the first section of the web path. the reel of the surface web and the reel of the inner web are respectively unwound by the second unwinding unit and the third unwinding unit, entering the second section and the third section of the web path, respectively. the intermediate web , following the first section of the web path, enters the first coating unit for applying adhesives on the front-side , then enters the fourth section of the web path.the surface web or inner web guided by the second section of the web path, and the intermediate web introduced by the fourth section of the web path, undergo the first laminating in the first laminating unit to form a duplex composite film. this duplex composite film, guided by the fifth section of the web path, enters the second coating unit.the second coating unit applies adhesives to the reverse side of the intermediate web of the duplex composite film, which then enters the sixth section of the web path. the surface web or inner web guided by the third section of the web path, and the duplex composite film introduced by the sixth section of the web path, undergo the second laminating in the second laminating unit to form a trilaminar composite film with double-sided coating of the intermediate web. this trilaminar composite film follows the seventh section of the web path to the winding unit for completion.

The following embodiments of solvent-free triplex laminating machine can complete the laminating process that apply adhesive on the both side of the intermediate web :

### Embodiment 1

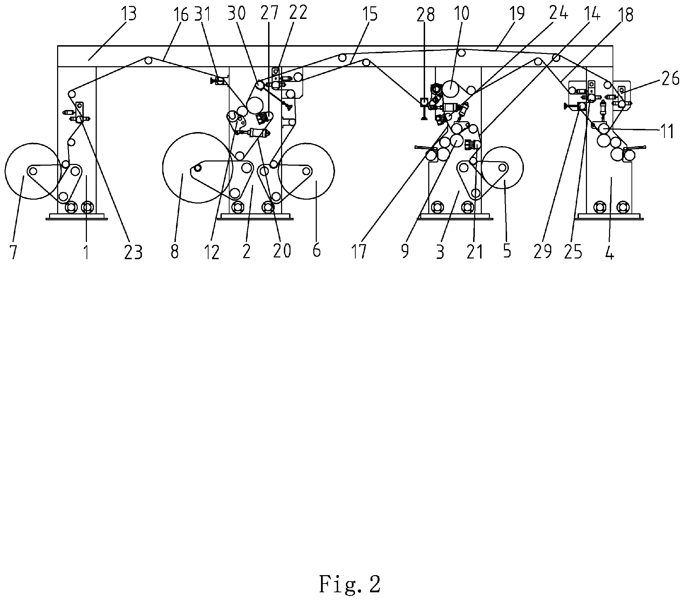

As shown in Figure 2, the four- station short winding path model comprises four stations arranged from left to right below the machine frame: the first station 1, the second station 2, the third station 3, and the fourth station 4. The third unwinding unit 7 is located to the left of the first station 1. The second station 2 has a winding unit 8 and the second unwinding unit 6 arranged below it on the left and right, respectively, and a second laminating unit 12 above on the left. The first coating unit 9 is positioned below and to the left of the third station 3, with the first laminating unit 10 above and to the left, and the first unwinding unit 5 below and to the right. The second coating unit 11 is located to the right of the fourth station 4. The section of the web path for this model are as follows: The first segment 14 is between the first unwinding unit 5 and the first coating unit 9 of the third station 3. The second segment 15 is between the second unwinding unit 6 of the second station 2 and the first laminating unit 10 of the third station 3. The third segment 16 is between the third unwinding unit 7 of the first station 1 and the second laminating unit 12 of the second station 2. The fourth segment 17 is between the first coating unit 9 and the first laminating unit 10 of the third station 3. The fifth segment 18 is between the first laminating unit 10 of the third station 3 and the second coating unit 11 of the f second station 4. The sixth segment 19 is between the second coating unit 11 of the fourth station 4 and the second laminating unit 12 of the second station 2. The seventh segment 20 is between the second laminating unit 12 and the winding unit 8 of the second station 2.

### Embodiment 2

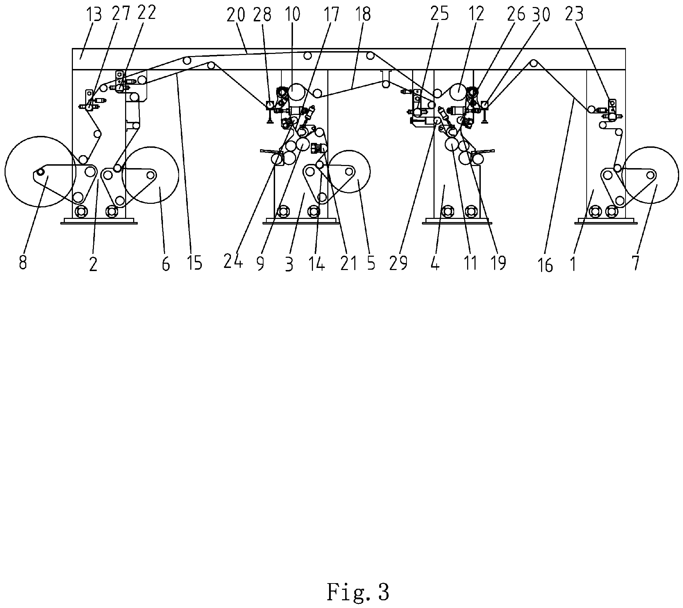

As shown in Figure 3, the four-unit short laminating path model includes four units arranged from left to right below the machine frame: the first station 2, the second station 3, the third station 4, and the fourth station 1. The winding unit 8 is located to the left of the first station 2, with the second unwinding unit 6 to the right. the first coating unit 9 is positioned below it to the left of the second station 3, with the first laminating unit 10 above to the left, and the first unwinding unit 5 below to the right. The second coating unit 11 is below to the right of the third station 4, with the second laminating unit 12 above to the right. The third unwinding unit 7 is located to the right of the fourth station 1. The section of the web paths for this model are as follows: The first segment 14 is between the first unwinding unit 5 and the first coating unit 9 of the second station 3. The second segment 15 is between the second unwinding unit 6 of the first station 2 and the first laminating unit 10 of the second station 3. The third segment 16 is between the third unwinding unit 7 of the fourth station 1 and the second laminating unit 12 of the third station 4. The fourth segment 17 is between the first coating unit 9 and the first laminating unit 10 of the second station 3. The fifth segment 18 is between the first laminating unit 10 of the second station 3 and the second coating unit 11 of the third station 4. The sixth segment 19 is between the second coating unit 11 and the second laminating unit 12 of the third station 4. The seventh segment 20 is between the second laminating unit 12 of the third station 4 and the winding unit 8 of the first station 2.

### Embodiment 3

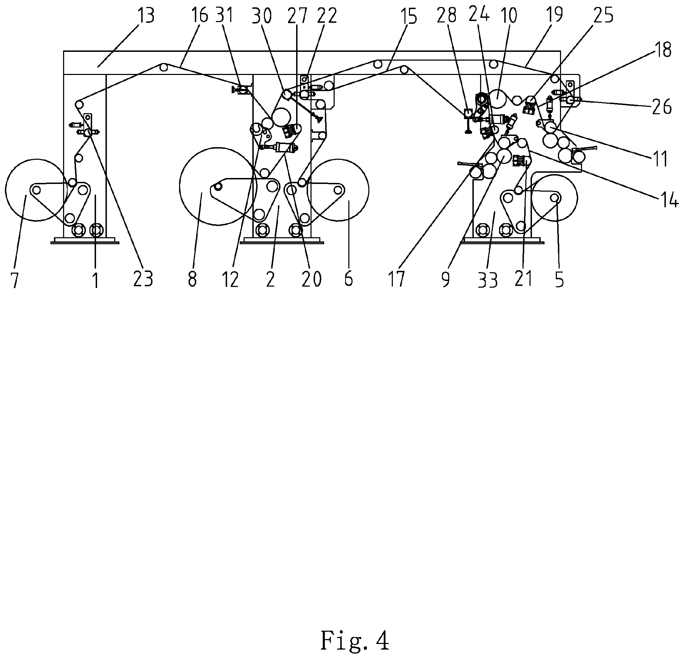

As shown in Figure 4, the three-station external unwinding model includes three stations arranged from left to right below the machine frame: the first station 1, the second station 2, and the third station 33. The third unwinding unit 7 is located to the left of the first station 1. The second station 2 has a winding unit 8 and the second unwinding unit 6 arranged below it on the left and right, respectively, and a second laminating unit 12 above on the left. The first coating unit 9 is below to the left of the third station 33, with the first laminating unit 10 above and to the left, and the first unwinding unit 5 below and to the right. The second coating unit 11 is above and to the right. The section of the web paths for this model are as follows: The first segment 14 is between the first unwinding unit 5 and the first coating unit 9 of the third station 33. The second segment 15 is between the second unwinding unit 6 of the second station 2 and the first laminating unit 10 of the third station 33. The third segment 16 is between the third unwinding unit 7 of the first station 1 and the second laminating unit 12 of the second station 2. The fourth segment 17 is between the first coating unit 9 and the first laminating unit 10 of the third station 33. The fifth segment 18 is between the first laminating unit 10 and the second coating unit 11 of the third station 33. The sixth segment 19 is between the second coating unit 11 of the third station 33 and the second laminating unit 12 of the second station 2. The seventh segment 20 is between the second laminating unit 12 and the winding unit 8 of the second station 2.

### Embodiment 4

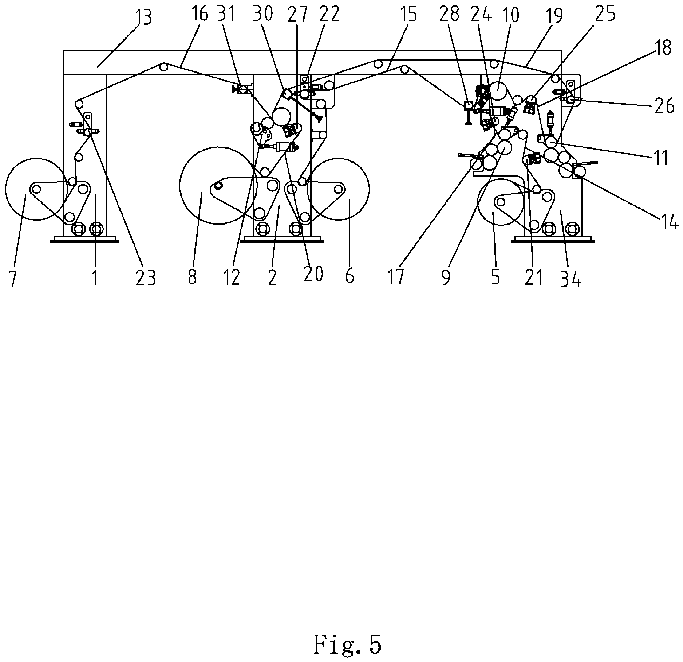

As shown in Figure 5, the three-unit internal unwinding model includes three units arranged from left to right below the machine frame: the first station 1, the second station 2, and the third station 34. The third unwinding unit 7 is located to the left of the first station 1. The second station 2 has a winding unit 8 and the second unwinding unit 6 arranged below it on the left and right, respectively, and a second laminating unit 12 above on the left. The first coating unit 9 is positioned in the middle left of the third station 34, with the first laminating unit 10 above to the left, and the first unwinding unit 5 below to the left. The second coating unit 11 is located to the right. The section of the web paths for this model are as follows: The first segment 14 is between the first unwinding unit 5 and the first coating unit 9 of the third station 34. The second segment 15 is between the second unwinding unit 6 of the second station 2 and the first laminating unit 10 of the third station 34. The third segment 16 is between the third unwinding unit 7 of the first station 1 and the second laminating unit 12 of the second station 2. The fourth segment 17 is between the first coating unit 9 and the first laminating unit 10 of the third station 34. The fifth segment 18 is between the first laminating unit 10 and the second coating unit 11 of the third station 34. The sixth segment 19 is between the second coating unit 11 of the third station 34 and the second laminating unit 12 of the second station 2. The seventh segment 20 is between the second laminating unit 12 and the winding unit 8 of the second station 2.

In all of the above embodiments, each model has tension sensing components 21, 22, 23, 24, 25, 26, 27 along the first, second, third, fourth, fifth, sixth, and seventh sections of the section of the web paths. These tension sensing components, along with PLC control, manage the tension of the material belt along each segment. The types of tension sensors include floating rollers or fixed rollers, depending on the rigidity of the base material and the variability of tension. Generally, fixed rollers are used for materials with higher rigidity, minimal tension variation, or shorter paths, such as the commonly used pillow-type tension sensors, while floating rollers are used for longer paths or significant tension variations.

Each model is equipped with adjustment roller assemblies 28, 29, 30, 31 at the entry points of the coating or laminating unit s to eliminate wrinkles in the material belt and ensure optimal operation of the units. The first and second coating units in each model are solvent-free coating units.

Comparing the models: The four-unit models, compared to the three-unit models, have a longer machine length but lower integration of units, resulting in simpler material paths and better operability. The three-unit models, compared to the four-unit models, have higher integration and shorter machine length. Among the four-unit models, the short winding path model has the shortest winding path after the second compounding, making it easier to ensure product winding quality. The short composite path model has a shorter second unwinding path before the second compounding. Among the three-unit models, the external unwinding model is more convenient for the first unwinding operation, while the internal unwinding model offers better observation for the second coating operation.

## Claims

1. A solvent-free triplex laminating machine based on double-sided coating of the intermediate web, **characterized by**:
the reel of the intermediate web is unwound by the first unwinding unit and enters the first section of the web path;
the reel of the surface web and the reel of the inner web are respectively unwound by the second unwinding unit and the third unwinding unit, entering the second section and the third section of the web path, respectively;
the intermediate web , following the first section of the web path, enters the first coating unit for applying adhesives on the front-side , then enters the fourth section of the web path;
the surface web or inner web guided by the second section of the web path, and the intermediate web introduced by the fourth section of the web path, undergo the first laminating in the first laminating unit to form a duplex composite film;
this duplex composite film, guided by the fifth section of the web path, enters the second coating unit;
the second coating unit applies adhesives to the reverse side of the intermediate web of the duplex composite film, which then enters the sixth section of the web path;
the surface web or inner web guided by the third section of the web path, and the duplex composite film introduced by the sixth section of the web path, undergo the second laminating in the second laminating unit to form a trilaminar composite film with double-sided coating of the intermediate web ;
this trilaminar composite film follows the seventh section of the web path to the winding unit for completion.

2. The solvent-free triplex laminating machine based on double-sided coating of the intermediate web as claimed in claim 1, **characterized by**: the solvent-free triplex laminating machine includes a frame, with the first unit, second unit, third unit, and fourth unit arranged in sequence from left to right beneath the frame;
the third unwinding unit is arranged on the left side of the first station;
the winding unit and the second unwinding unit are arranged on the lower left and right of the second station, respectively;
the second laminating unit is arranged above the left side of the second station;
the first coating unit is arranged at the lower left of the third station;
the first laminating unit is arranged above the left side of the third station;
the first unwinding unit is arranged at the lower right of the third station;
the second coating unit is arranged on the right side of the fourth station;
the first section of the web path is located between the first unwinding unit and the first coating unit of the third station;
the second section of the web path is located between the second unwinding unit of the second station and the first laminating unit of the third station;
the third section of the web path is located between the third unwinding unit of the first station and the second laminating unit of the second station;
the fourth section of the web path is located between the first coating unit and the first laminating unit of the third station;
the fifth section of the web path is located between the first laminating unit of the third station and the second coating unit of the fourth station;
the sixth section of the web path is located between the second coating unit of the fourth station and the second laminating unit of the second station;
the seventh section of web path is located between the second laminating unit of the second station and the winding unit.

3. The solvent-free triplex laminating machine based on double-sided coating of the intermediate web as claimed in claim 1, **characterized by**: the solvent-free triplex laminating machine includes a frame, with the first station, second station, third station, and fourth station arranged in sequence from left to right beneath the frame; the winding unit is arranged on the left side of the first station;
the second unwinding unit is arranged on the right side of the first station;
the first coating unit is arranged at the lower left of the second station;
the first laminating unit is arranged above the left side of the second station;
the first unwinding unit is arranged at the lower right of the second station;
the second coating unit is arranged at the lower right of the third station;
the second laminating unit is arranged above the right side of the third station;
the third unwinding unit is arranged on the right side of the fourth station;
the first section of the web path is located between the first unwinding unit and the first coating unit of the second station;
the second section of the web path is located between the second unwinding unit of the first station and the first laminating unit of the second station;
the third section of the web path is located between the third unwinding unit of the fourth station and the second laminating unit of the third station;
the fourth section of the web path is located between the first coating unit and the first laminating unit of the second station;
the fifth section of the web path is located between the first laminating unit of the second station and the second coating unit of the third station;
the sixth section of the web path is located between the second coating unit and the second laminating unit of the third station ;
the seventh web path is located between the second laminating unit of the third station and the winding unit of the first station.

4. The solvent-free triplex laminating machine based on double-sided coating of the intermediate web as claimed in claim 1, **characterized by**: The solvent-free triplex laminating machine includes a frame, with the first station, second station, and third station arranged in sequence from left to right beneath the frame;
the third unwinding unit is arranged on the left side of the first station;
the winding unit and the second unwinding unit are arranged on the lower left and right of the second station, respectively;
the second laminating unit is arranged above the left side of the second station;
the first coating unit is arranged at the lower left of the third station;
the first laminating unit is arranged above the left side of the third unit;
the first unwinding unit is arranged at the lower right of the third station;
the second coating unit is arranged above the right side of the third station;
the first section of the web path is located between the first unwinding unit and the first coating unit of the third station;
the second section of the web path is located between the second unwinding unit of the second station and the first laminating unit of the third station;
the third section of the web path is located between the third unwinding unit of the first station and the second laminating unit of the second station;
the fourth section of the web path is located between the first coating unit and the first laminating unit of the third station;
the fifth section of the web path is located between the first laminating unit and the second coating unit of the third station;
the sixth section of the web path is located between the second coating unit of the third station and the second laminating unit of the second station;
the seventh web path is located between the second laminating unit and the winding unit of the second station.

5. The solvent-free triplex laminating machine based on double-sided coating of the intermediate web as claimed in claim 1, **characterized by**: The solvent-free triplex laminating machine includes a frame, with the first station, second station, and third station arranged in sequence from left to right beneath the frame;
the third unwinding unit is arranged on the left side of the first station;
the winding unit and the second unwinding unit are arranged on the lower left and right of the second station, respectively;
the second laminating unit is arranged above the left side of the second station;
the first coating unit is arranged at the middle left of the third station;
the first laminating unit is arranged above the left side of the third station;
the first unwinding unit is arranged at the lower left of the third station;
the second coating unit is arranged on the right side of the third station;
the first section of the web path is located between the first unwinding unit and the first coating unit of the third station;
the second section of the web path is located between the second unwinding unit of the second station and the first laminating unit of the third station;
the third section of the web path is located between the third unwinding unit of the first station and the second laminating unit of the second station;
the fourth section of the web path is located between the first coating unit and the first laminating unit of the third station;
the fifth section of the web path is located between the first laminating unit and the second coating unit of the third station;
the sixth section of the web path is located between the second coating unit of the third station and the second laminating unit of the second station;
the seventh web path is located between the second laminating unit and the winding unit of the second station.

6. The solvent-free triplex laminating machine based on double-sided coating of the intermediate web as claimed in any one of claims 1 to 5, **characterized by**: both the first coating unit and the second coating unit are solvent-free coating units.

7. The solvent-free triplex laminating machine based on double-sided coating of the intermediate web as claimed in any one of claims 1 to 5, **characterized by**: tension sensing components for the substrate belt are provided in the first section, second section, third section, fourth section, fifth section, sixth section, and seventh section of the web path.
